# EUROPEAN PATENT SPECIFICATION

(11) **EP 4 476 016 B1**
(45) Date of publication and mention of the grant of the patent: **21.01.2026**
(21) Application number: 23708275.5
(22) Date of filing: 06.02.2023
(51) Int. Cl.: B23K 1/20, B23K 3/08, B25H 3/02, G07F 9/10

(54) **MODULE FOR STORING SOLDER PASTE FOR SOLDERING WITH A PLURALITY OF THERMAL GROUPS**
MODUL ZUR AUFBEWAHRUNG VON LÖTPASTE ZUM LÖTEN MIT MEHREREN WÄRMEGRUPPEN
MODULE DE STOCKAGE D'UNE PÂTE À BRASER POUR UN BRASAGE AVEC UNE PLURALITÉ DE GROUPES THERMIQUES

(30) Priority: 07.02.2022 IT 202200002105
(43) Date of publication of application: 18.12.2024
(73) Proprietor: ESSEGI AUTOMATION S.R.L., 36049 Sovizzo (VI) (IT)
(72) Inventor: PADOAN, Matteo, 36049 SOVIZZO (VI) (IT)
(74) Representative: Marchioro, Paolo
(86) International application number: PCT/IB2023/051047
(87) International publication number: WO 2023/148696

(56) References cited:
- CN-A- 108 747 100
- CN-U- 210 524 086
- IT-A1- TO20 060 116
- JP-A- 2006 025 612
- KR-B1- 101 186 380

## Description

The invention concerns a module for storing solder paste that is used, preferably but not exclusively, in the electronic sector for soldering electronic components in circuits according to the preamble of claim 1 (see for example CN 210 524 086 U).

Soldering the electronic components that make up circuits and electronic boards of various types is known to be carried out using special solder pastes that are composed of powder metal soldering mixed with a so-called "flux" substance that performs the dual function of depassivating the surfaces to be soldered together and of favouring their so-called "wettability" when the solder alloy is in the molten state.

The solder pastes are packaged in jars and are stored inside special modules each comprising a container in which the jars and the solder paste they contain are kept at a predetermined temperature.

In fact, it is known that in order to obtain good quality solders, the solder pastes must be stored and used at well-defined temperatures whose values depend on the type of solder paste and the manufacturer's requirements.

Solder pastes must usually be stored at a temperature that can vary from 4°C to 10°C depending on the type and the manufacturer's requirements.

In addition, the solder paste is used at the so-called "room temperature" which usually has a value comprised between 20°C and 27°C, unless otherwise indicated by the manufacturer.

The solder paste is thus stored inside the modules at the prescribed temperature and when it is to be used the user takes one or more jars out of the module in which they are stored and places them in the working environment, waiting for the solder paste to heat up spontaneously until it reaches the desired temperature of use.

At the end of use, the requirements for use provide that for some types of solder paste the quantity remaining in the jars is introduced again in the modules so as to be stored at the same storage temperature at which it was at the time it was picked.

For other types of solder pastes, the requirements for use provide instead that the remaining quantity is stored in the modules at the same temperature at which it was used, i.e. at the previously defined "room temperature".

In this case, the remaining solder paste must not be cooled again to bring it back to storage temperature.

The modules of known type for storing solder pastes that are available on the market have a number of recognized drawbacks.

A first drawback is constituted by the fact that generally these known modules are divided into several mutually isolated and independent sectors and all the jars contained in the same sector are stored at the same temperature that is set on the thermostat.

This constitutes a recognized and obvious limitation as the user would be in trouble if he had to store at a predetermined temperature a number of jars exceeding the capacity of the sector that within the module allows that temperature to be maintained.

Another limitation consists in that within each sector jars cannot be stored at temperatures that are different from one another.

Furthermore, the modules of known type described do not allow to also heat up inside them the jars up to the "room temperature" of use of the solder paste. The present invention therefore intends to realize a module that does not present the recognized drawbacks that have now been listed.

In particular, a first aim is to realize a module that allows each individual jar containing solder paste to be stored inside it at any pre-chosen temperature, regardless of the position in which the jar is placed inside the module.

Another aim is that the module of the invention also allows to heat up each jar containing solder paste to any temperature of use pre-chosen by the user without having to take it out of the module.

A further aim is that within the module of the invention the jars can be maintained at the storage temperature and at the same time some of the aforementioned jars that are pre-chosen can be heated up to the temperature of use.

The aims listed are achieved by a module for storing solder paste for soldering according to the present invention as defined in claim 1. Preferred embodiments of the present invention are defined in the dependent claims. Advantageously with respect to the modules of the prior art equivalent thereto and having equal capacity in containing jars, the module of the invention gives the user the possibility to choose for each jar and for the solder paste it contains a storage temperature of any value.

This is particularly advantageous especially for the storage at the prescribed temperature of jars containing solder paste that has remained after previous uses.

Accordingly, advantageously with respect to the modules of known type, the internal volume of the module of the invention does not need to be divided into mutually independent sectors with different storage temperatures.

In this way within the module of the invention the jars can be arranged randomly and in any position regardless of the value of the storage temperature necessary for the solder paste each of them contains.

This entails the additional advantage, compared to the modules of known type with equal total capacity that are divided into several storage sectors at mutually different temperatures, of being able to house a number of jars until the module is completely saturated.

The aims and advantages listed, and any others, will be better highlighted below during the description of a preferred, but not exclusive, embodiment of the module of the invention, which is given below for indicative and not exclusive purposes only with reference to the attached drawing tables, in which:
- Figures 1 and 2 represent two different axonometric views of the module of the invention;
- Figure 3 represents an enlarged axonometric view of a detail placed inside the module of Figures 1 and 2;
- Figure 4 represents in exploded axonometric view a detail of Figures 2 and 3;
- Figure 5 represents the detail of Figure 4 in assembled axonometric view;
- Figure 6 represents the detail of Figure 5 upside down.

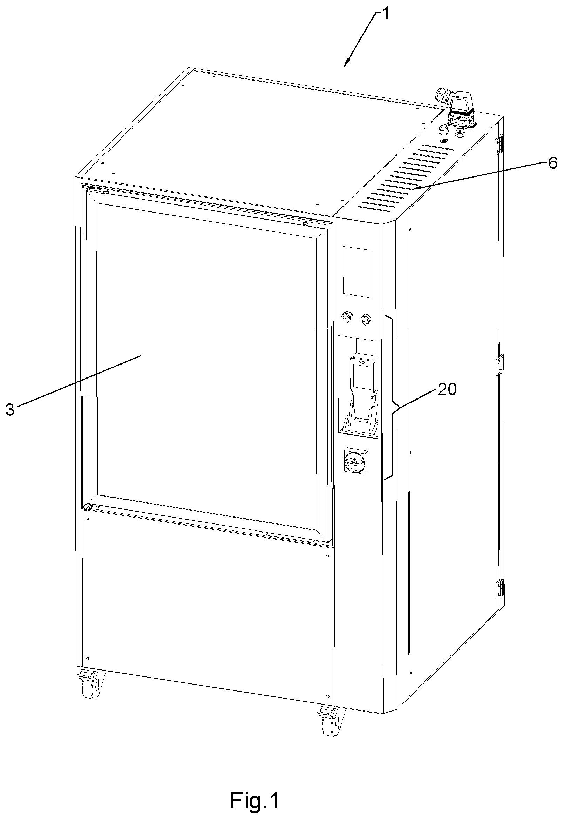

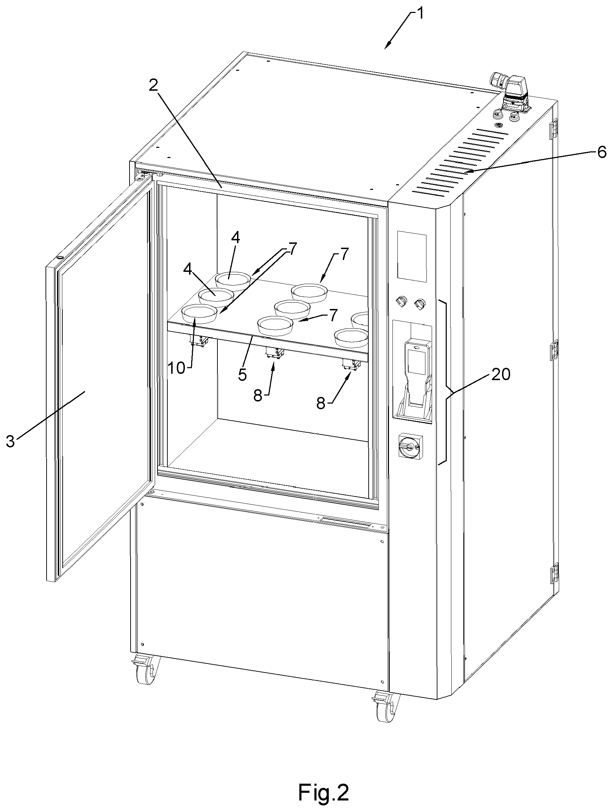

The module of the invention, which is represented in the axonometric views of Figures 1 and 2 where it is indicated overall with **1,** is used to store therein jars **4** containing solder paste that is used to make solders.

Preferably, but not exclusively, each jar **4** and the solder paste it contains are stored in the module **1** at a predetermined temperature and the solder paste is preferably but not exclusively used to solder components to make electronic boards and circuits of various kind.

It can be observed that the module **1** comprises a container **2** provided with an access door **3** and in which there is a support plane **5** of the aforementioned jars **4.**

Although only one support plane **5** is represented in the figures, the module **1** of the invention can accommodate any number of support planes **5.**

In addition, the module **1** is also provided with ventilation means **6** of the internal volume delimited by the container **2.**

According to the invention the module **1** comprises a plurality of thermal groups **7** which are supported by the support plane **5** and each thermal group **7** is configured to accommodate a jar **4** and to cool/heat up and maintain the solder paste contained in the jar **4** at a pre-chosen temperature, independently of the remaining thermal groups **7.**

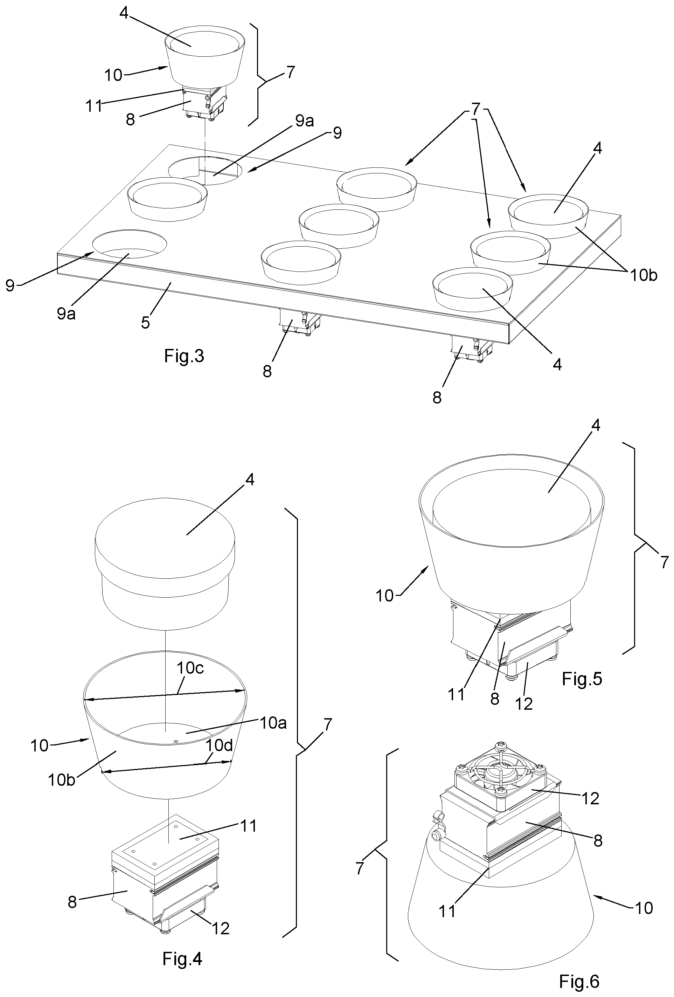

The thermal groups **7** are visible overall in Figure 2 and also in Figure 3 and one of the aforementioned thermal groups **7** is represented in Figure 4 in partially exploded axonometric view.

According to the present invention, each thermal group **7** comprises a Peltier cell **11** coupled to a heat sink **8** provided with a fan **12.**

Furthermore, each thermal group **7** also comprises a jar holder **10** which accommodates a jar **4** containing the solder paste and is arranged in contact with the Peltier cell **11** and preferably but not exclusively above it.

Each thermal group **7** cools, or heats up, or maintains each jar **4** and the solder paste it contains at a pre-chosen temperature using the Peltier cell **11.**

As is known, a Peltier cell is a thermoelectric device comprising a thin plate containing semiconductor materials.

When the plate is fed by direct electric current, one of the surfaces that delimit it heats up, while the opposite surface cools down and the direction according to which the heat is transferred from one surface to the other depends on the direction of the direct current applied to the opposite surfaces of the plate.

In this way each of the opposite surfaces of the plate can be alternately heat or cold depending on the direction in which the direct electric current runs through the plate.

As can be observed in Figure 3, each thermal group **7** is inserted in a respective housing **9** present in the support plane **5** and comprises a jar holder **10** with frusto-conical shape which, as can be observed in Figures 3 to 5, is configured to accommodate a respective jar **4** containing the solder paste.

The jar holder **10** is placed in contact with the Peltier cell **11** and preferably above it and the solder paste contained in the jar **4** is thus heated, or cooled, or maintained at the pre-chosen temperature, simply by reversing the direction in which the electric current runs through the Peltier cell **11.**

In more detail, when the surface of the Peltier cell **11** in contact with the jar holder **10** and containing the jar **4** is cooled, the solder paste contained in the jar **4** is also cooled.

At the same time, the opposite surface of the Peltier cell **11** heats up and the heat sink **8,** which is placed in contact with it, dissipates the produced heat that is driven away by the cooling fan **12** coupled to the heat sink **8.**

Conversely, when the surface of the Peltier cell **11** placed in contact with the heat sink **8** cools down, the opposite surface of the Peltier cell **11** heats up and it therefore also heats the jar holder **10** and the jar **4** with the solder paste it contains.

This allows the advantage, with respect to the prior art, that the container **2** of the module **1** of the invention must not be a refrigerated container since cooling and maintaining at the temperature the jars **4** and the solder paste they contain are carried out individually for each jar **4.**

This also allows the advantage that the container may not be divided into sectors.

In addition, advantageously, heating each jar **4** and the solder paste it contains is also carried out inside the module **1** with no need of taking it out so that it spontaneously heats up in the environment outside the module **1.**

The values of the storage and use temperature of the solder paste can be any and chosen by the user, or prescribed by the supplier of the solder paste.

The storage temperature of the solder paste has a constant value that, as mentioned, usually varies between values comprised between 4°C and 10°C, depending on the type of solder and/or the requirements of the manufacturer. In addition, the temperature of use of the solder paste has a constant value that is usually chosen in a range of values comprised between 20°C and 27°C, depending on the type of solder and/or the manufacturer's requirements.

It is also noted that each jar holder **10** is a frusto-conical-shaped vessel whose minor base **10a** is placed in contact with the Peltier cell **11** and whose lateral surface **10b** is constrained by contrast in the respective housing **9** present in the support plane **5** when the thermal group **7** to which the jar holder **10** belongs is inserted in the respective housing **9,** as can be noted in Figure 3.

In fact, the housing **9** is a through hole **9a** whose diameter is smaller than the larger diameter **10c** and larger than the smaller diameter **10d** of the jar holder **10.**

Therefore, each thermal group **7** is introduced into the respective housing **9** by inserting the respective Peltier cell **11** through the through hole **9a,** as can be observed in Figure 3, and stops when the lateral surface **10b** of the jar holder **10** interferes with the circumference of the through hole **9a,** as can be observed again in Figure 3.

A different embodiment is possible, which is not represented in the figures, in which the jar holder **10** is not inserted with interference in the through hole **9a** but is simply placed on the support plane **5** and placed in contact with the Peltier cell **11.**

According to the preferred embodiment of the invention, each thermal group **7** preferably but not necessarily also comprises a load cell, not represented in the figures. Each of these load cells of each thermal group **7** is configured to detect the presence or absence of a jar **4** and also to detect the weight of the aforementioned jar **4,** in such a way, as will be clarified below, that the module **1** is able to discriminate when a jar **4** is present, is new or the content of said jar **4** has already been partially used.

The module **1** of the invention also comprises a control panel **20** accessible by a user and comprising at least means for setting and displaying the storage and use temperatures of the solder paste contained in each of the jars **4.**

In particular, for each type of jar **4,** that is for each type of solder paste contained in said jar **4,** these setting means allow to set or acquire from an external server, as described below, the storage temperature of the new solder paste, the temperature and heating time before the actual use of the solder paste and the storage temperature of the solder paste already previously used. The module **1** of the invention also comprises computer means comprising in turn memory means in which there is stored a computer product that when being processed displays the storage and use temperatures set by the user for each of the jars **4** present in the module **1** and for the solder paste they contain.

During processing, the computer product also displays the actual storage and use temperatures of each of the jars **4** contained in the module **1** and signals:
- that the temperature of use of the solder paste contained in one or more of the jars **4** that have been chosen to use the solder paste they contain has been reached;
- situations of abnormal operation of the thermal groups **7.**

Obviously, the listed functions are only some of the functions that the aforementioned computer product can perform when it is being processed. The module **1** and the control panel **20** constitute a system that is preferably connected to a centralized server in which the management data for each type/brand of solder paste is contained.

Each jar **4** is traced with a unique code and each unique code is matched with a type/brand of solder paste.

The unique code is used for the insertion and the extraction of the jar **4.**

By reading the unique code, the system learns the type/brand of the solder paste contained in the jar and whether it is a new or partially used jar.

In the event that the module **1** of the invention provides for the presence of a load cell for each thermal group **7,** the discrimination of the fact that a jar **4** is new or is already partially used is implemented by measuring the weight which is performed by said load cell, knowing a priori the weight of the aforementioned jar **4** as new.

This allows the system to autonomously set the parameters of the storage station. In particular, the system is able to store this jar **4** with the storage temperature of the new solder paste or with the storage temperature of the solder paste already previously used, based on the detection carried out by means of the aforementioned load cell.

In addition, the presence of a centralized control allows the solder paste to be prepared by bringing it to "room temperature" with a predetermined time in advance of the moment of the actual use which depends on the type/brand of the solder paste.

The advance in time will be defined according to criteria that will be established by the user and/or that will be acquired by the aforementioned server for the specific type of solder paste contained in each jar **4.**

Operationally, for the storage of a jar **4** containing solder paste it is sufficient to introduce it into any housing **9** present inside the container **2** of the module **1** and to detect its unique code. At this point, the module **1** is able to associate for each jar **4** the storage and use parameters previously set or acquired by the aforementioned setting means of the control panel **20.**

The computer means that control the operation of the module **1** bring the solder paste up to the pre-set storage temperature and keep it constant until the moment of use.

When the user wants to use the solder paste, he chooses on the control panel **20** the jar **4** that contains it and the computer means manage its heating up to the previously pre-set temperature of use.

When the temperature of use is reached, the computer means signal on the control panel **20** or in another visual or sound way that the temperature of use has been reached and the jar **4** can be picked.

In particular, in addition to or as an alternative to the display means present in the control panel **20,** one or more LEDs could be provided arranged at each housing **9,** configured, by means of the control of the aforementioned computer product, to visually signal for each housing **9** the availability of the latter to accommodate a jar **4,** or, if the jar **4** is already present in the housing **9,** to visually signal if the jar **4** is being heated or cooled and if the jar **4,** and therefore the solder paste, are ready for use.

After use, the jar **4** containing the remaining solder paste is introduced again into the module **1** and, depending on the type of solder paste or based on the supplier's requirements, it is cooled again or stored at the room temperature to which it was brought for use. As mentioned above, the detection of the fact that a jar **4** contains a solder paste that has already been partially used is preferably carried out by using the aforementioned load cell.

Based on what has been described, it is understood that the module of the invention achieves the purposes and advantages set forth and listed in the introductory part of the present description.

The description has in fact highlighted that the aim of realizing a module **1** in which the container **2** housing the jars **4** with the solder paste does not need to be refrigerated, as instead is the case in the modules of the prior art, is reached.

Furthermore, it has been seen that the module of the invention allows jars **4** containing solder paste to be stored therein where each individual jar **4** and the solder paste it contains are maintained at any pre-chosen temperature, regardless of the position in which each jar **4** is placed inside the module **1** and regardless of the remaining jars present in the same module **1.**

The aim of heating each jar **4** and the solder paste it contains to any temperature pre-chosen by the user without having to pull it out of the module **1** is also reached.

The further aim that within the module **1** of the invention the user can simultaneously carry out both the heating and the cooling of one or more jars **4** and of the solder paste they contain is thus reached.

Furthermore, unlike the prior art, the use of the thermal group **7** of the invention provided with Peltier cell **11** allows to keep constantly under control the temperature of the jars **4** and of the solder paste they contain from the moment of insertion in the module **1** until the moment of extraction for use.

The description has also highlighted that, advantageously with respect to modules of the prior art equivalent to it and having equal capacity for containing jars, the module **1** of the invention allows the user to choose for each jar **4** any storage temperature of the solder paste it contains independently of the position that each jar **4** occupies within the module **1.**

This, therefore, allows a more rational use of the module **1** since it is not necessary for its internal volume to be divided into independent sectors and within the module of the invention the jars **4** can be arranged randomly regardless of the value of the storage temperature necessary for the solder paste they contain.

In this way, advantageously, the internal volume of the module **1** of the invention can be completely saturated and house a greater number of jars than the modules of the prior art having equal total internal volume available. Obviously, in the module **1** of the invention the positioning of each jar is traced by computer means.

## Claims

1. Module (1) for storing solder paste for soldering comprising:
- a container (2) provided with an access door (3) and configured to accommodate one or more jars (4) containing said solder paste;
- one or more support planes (5) arranged inside said container (2),
**characterized by** comprising a plurality of thermal groups (7) supported by said one or more support planes (5), each of said thermal groups (7) being configured to accommodate at least one of said jars (4) and to cool and/or heat and/or maintain said jars (4) and said solder paste contained in said jars (4) at a pre-chosen temperature, each of said thermal groups (7) comprising a Peltier cell (11) associated with a heat sink (8).

2. Module (1) according to claim 1, **characterized in that** each of said thermal groups (7) is inserted in a respective housing (9) present in each of said one or more support planes (5) and comprises a jar holder (10) which is placed in contact with said Peltier cell (11) and is configured to accommodate a respective jar (4) containing said solder paste.

3. Module (1) according to any one of claims 1 or 2, **characterized in that** each of said thermal groups (7) also comprises a cooling fan (12) applied to said heat sink (8).

4. Module (1) according to any one of claims 2 or 3, **characterized in that** each jar holder (10) is a vessel having a frustoconical shape whose smaller base (10a) is placed in contact with said Peltier cell (11) and whose lateral surface (10b) is constrained by contrast with the respective housing (9) present in the support plane (5) when the thermal group (7) to which said jar holder (10) belongs is inserted into the respective housing (9).

5. Module (1) according to any one of claims 2 to 4, **characterized in that** said housing (9) is a through hole (9a) whose diameter is smaller than the larger diameter (10c) and larger than the smaller diameter (10d) of said jar holder (10).

6. Module (1) according to any one of the preceding claims, **characterized in that** each of said thermal groups (7) also comprises a load cell.

7. Module (1) according to any one of the preceding claims, **characterized by** comprising ventilation means (6) of the internal volume of said container (2).

8. Module (1) according to any one of the preceding claims, **characterized by** comprising:
- a control panel (20) accessible by a user and comprising at least means for setting and displaying the storage and use temperatures of the solder paste contained in each of said jars (4);
- computer means comprising memory means in which there is stored a computer product that when being processed performs at least the following functions:
- displays said storage and use temperatures set by the user for each of said jars (4) contained in said module (1);
- displays the actual storage and use temperatures of each of said jars (4) contained in said module (1);
- signals that the use temperature of the solder paste contained in one or more of said jars (4) has been reached when said jars (4) are chosen to use the solder paste they contain;
- signals situations of abnormal operation of said thermal groups (7).

9. Module (1) according to claim 8 in combination with claim 6, **characterized in that** said computer product is configured to:
- detect the presence of a jar (4) at a thermal group (7) by means of the measurement carried out by said load cell belonging to said thermal group (7);
- in the affirmative case, discriminate whether said jar (4) present in said thermal group (7) is a new jar or a partially used jar, on the basis of said measurement carried out by said load cell against the preset value relative to the weight of said jar (4) as new;
- define the storage temperature of said jar (4) depending on whether said jar (4) has been assessed as new or has been assessed as already partially used.

## Patentansprüche

1. Modul (1) zum Lagern von Lötpaste zum Löten, umfassend:
- einen Behälter (2), der mit einer Zugangstür (3) versehen und dazu konfiguriert ist, ein oder mehrere Gefäße (4), die die besagte Lötpaste enthalten, aufzunehmen;
- eine oder mehrere Stützebenen (5), die innerhalb des besagten Behälters (2) angeordnet sind,
**dadurch gekennzeichnet, dass** er eine Vielzahl von thermischen Gruppen (7) umfasst, die von der besagten einen Stützebene oder den besagten mehreren Stützebenen (5) gestützt werden, wobei jede der besagten thermischen Gruppen (7) dazu konfiguriert ist, mindestens eines der besagten Gefäße (4) aufzunehmen und die besagten Gefäße (4) und die besagte Lötpaste, die in den besagten Gefäßen (4) enthalten ist, auf eine vorgewählte Temperatur abzukühlen und/oder zu erwärmen und/oder auf dieser zu halten, wobei jede der besagten thermischen Gruppen (7) ein Peltier-Element (11) umfasst, das einem Kühlkörper (8) zugeordnet ist.

2. Modul (1) nach Patentanspruch 1, **dadurch gekennzeichnet, dass** jede der besagten thermischen Gruppen (7) in ein jeweiliges Gehäuse (9) eingesetzt ist, das in jeder der besagten einen oder mehreren Stützebenen (5) vorhanden ist, und einen Gefäßhalter (10) umfasst, der in Kontakt mit dem besagten Peltier-Element (11) gebracht wird und konfiguriert ist, um ein jeweiliges Gefäß (4), das die besagte Lötpaste enthält, aufzunehmen.

3. Modul (1) nach jeglichem der Patentansprüche 1 oder 2, **dadurch gekennzeichnet, dass** jede der besagten thermischen Gruppen (7) auch ein Kühlgebläse (12) umfasst, das am besagten Kühlkörper (8) angebracht ist.

4. Modul (1) nach jeglichem der Patentansprüche 2 oder 3, **dadurch gekennzeichnet, dass** jeder Gefäßhalter (10) ein Behältnis mit einer kegelstumpfförmigen Form ist, dessen kleinere Basis (10a) in Kontakt mit dem besagten Peltier-Element (11) gebracht wird und dessen Seitenfläche (10b) durch Gegenhalt am jeweiligen Gehäuse (9), das in der Stützebene (5) vorhanden ist, befestigt wird, wenn die thermische Gruppe (7), zu der der besagte Gefäßhalter (10) gehört, in das jeweilige Gehäuse (9) eingesetzt wird.

5. Modul (1) nach jeglichem der Patentansprüche 2 bis 4, **dadurch gekennzeichnet, dass** das besagte Gehäuse (9) ein Durchgangsloch (9a) ist, dessen Durchmesser kleiner als der größere Durchmesser (10c) und größer als der kleinere Durchmesser (10d) des besagten Gefäßhalters (10) ist.

6. Modul (1) nach jeglichem der vorhergehenden Patentansprüche, **dadurch gekennzeichnet, dass** jede der besagten thermischen Gruppen (7) auch eine Wägezelle umfasst.

7. Modul (1) nach jeglichem der vorhergehenden Patentansprüche, **dadurch gekennzeichnet, dass** es Belüftungsmittel (6) für das Innenvolumen des besagten Behälters (2) umfasst.

8. Modul (1) nach jeglichem der vorhergehenden Patentansprüche, **dadurch gekennzeichnet, dass** es Folgendes umfasst:
- ein Bedienfeld (20), das für einen Benutzer zugänglich ist und mindestens Mittel zum Festlegen und Anzeigen der Lager- und Gebrauchstemperaturen der Lötpaste, die in jedem der besagten Gefäße (4) enthalten ist, umfasst;
- Computermittel, die Speichermittel umfassen, in denen ein Computerprodukt gespeichert ist, das während des Verarbeitens mindestens die folgenden Funktionen ausführt:
- Anzeigen der besagten Lager- und Gebrauchstemperaturen, die vom Benutzer für jedes der besagten Gefäße (4), die im besagten Modul (1) enthalten sind, festgelegt werden;
- Anzeigen der tatsächlichen Lager- und Gebrauchstemperaturen jedes der besagten Gefäße (4), die im besagten Modul (1) enthalten sind;
- Signalisieren, dass die Gebrauchstemperatur der Lötpaste, die in einem oder mehreren der besagten Gefäße (4) enthalten ist, erreicht wurde, wenn die besagten Gefäße (4) ausgewählt werden, um die Lötpaste, die sie enthalten, zu verwenden;
- Signalisieren von ungewöhnlichen Betriebssituationen der besagten thermischen Gruppen (7).

9. Modul (1) nach Patentanspruch 8 in Kombination mit Patentanspruch 6, **dadurch gekennzeichnet, dass** das besagte Computerprodukt für Folgendes konfiguriert ist:
- Erfassen des Vorhandenseins eines Gefäßes (4) an einer thermischen Gruppe (7) mittels der Messung, die von der besagten Wägezelle, die zur besagten thermischen Gruppe (7) gehört, durchgeführt wird;
- im positiven Fall Unterscheiden, ob das besagte Gefäß (4), das sich in der besagten thermischen Gruppe (7) befindet, ein neues Gefäß oder ein teilweise verwendetes Gefäß ist, basierend auf der besagten Messung, die von der besagten Wägezelle im Vergleich zum voreingestellten Wert relativ zum Gewicht des besagten Gefäßes (4) im Neuzustand durchgeführt wird;
- Definieren der Lagertemperatur des besagten Gefäßes (4) in Abhängigkeit davon, ob das besagte Gefäß (4) als neu oder als bereits teilweise verwendet bewertet wurde.

## Revendications

1. Module (1) de stockage de pâte à souder pour le soudage comprenant:
- un conteneur (2) muni d'une porte d'accès (3) et configuré pour recevoir un ou plusieurs pots (4) contenant ladite pâte à souder;
- un ou plusieurs plans de support (5) disposés à l'intérieur dudit conteneur (2), **caractérisé en ce qu'il** comprend une pluralité de groupes thermiques (7) supportés par lesdits un ou plusieurs plans de support (5), chacun desdits groupes thermiques (7) étant configuré pour accueillir au moins un desdits pots (4) et pour refroidir et/ou chauffer et/ou maintenir lesdits pots (4) et ladite pâte à souder contenue dans lesdits pots (4) à une température présélectionnée, chacun desdits groupes thermiques (7) comprenant une cellule Peltier (11) associée à un dissipateur de chaleur (8).

2. Module (1) selon la revendication 1, **caractérisé en ce que** chacun desdits groupes thermiques (7) est inséré dans un logement respectif (9) présent dans chacun desdits un ou plusieurs plans de support (5) et comprend un porte-pot (10) qui est mis en contact avec ladite cellule Peltier (11) et est configuré pour accueillir un pot respectif (4) contenant ladite pâte à souder.

3. Module (1) selon l'une quelconque des revendications 1 ou 2, **caractérisé en ce que** chacun desdits groupes thermiques (7) comprend également un ventilateur de refroidissement (12) appliqué audit dissipateur de chaleur (8).

4. Module (1) selon l'une quelconque des revendications 2 ou 3, **caractérisé en ce que** chaque porte-pot (10) est un récipient de forme tronconique dont la plus petite base (10a) est mise en contact avec ladite cellule Peltier (11) et dont la surface latérale (10b) est contrainte par contraste avec le logement respectif (9) présent dans le plan de support (5) lorsque le groupe thermique (7) auquel appartient ledit porte-pot (10) est inséré dans le logement respectif (9).

5. Module (1) selon l'une quelconque des revendications 2 à 4, **caractérisé en ce que** ledit logement (9) est un trou traversant (9a) dont le diamètre est inférieur au plus grand diamètre (10c) et supérieur au plus petit diamètre (10d) dudit porte-pot (10).

6. Module (1) selon l'une quelconque des revendications précédentes, **caractérisé en ce que** chacun desdits groupes thermiques (7) comprend également une cellule de charge.

7. Module (1) selon l'une quelconque des revendications précédentes, **caractérisé en ce qu'il** comprend des moyens de ventilation (6) du volume intérieur dudit conteneur (2).

8. Module (1) selon l'une quelconque des revendications précédentes, **caractérisé en ce qu'il** comprend:
- un panneau de commande (20) accessible par un utilisateur et comprenant au moins des moyens de réglage et d'affichage des températures de stockage et d'utilisation de la pâte à souder contenue dans chacun desdits pots (4);
- des moyens informatiques comprenant des moyens de mémoire dans lesquels est stocké un produit informatique qui, lorsqu'il est traité, exécute au moins les fonctions suivantes:
- affichage desdites températures de stockage et d'utilisation fixées par l'utilisateur pour chacun desdits pots (4) contenus dans ledit module (1);
- affichage des températures réelles de stockage et d'utilisation de chacun desdits pots (4) contenus dans ledit module (1);
- indication que la température d'utilisation de la pâte à souder contenue dans un ou plusieurs desdits pots (4) est atteinte lorsque lesdits pots (4) sont choisis pour utiliser la pâte à souder qu'ils contiennent;
- indication des situations de fonctionnement anormal desdits groupes thermiques (7).

9. Module (1) selon la revendication 8 en combinaison avec la revendication 6, **caractérisé en ce que** ledit produit informatique est configuré pour:
- détecter la présence d'un pot (4) au niveau d'un groupe thermique (7) au moyen de la mesure effectuée par ladite cellule de charge appartenant audit groupe thermique (7);
- dans le cas affirmatif, discriminer si ledit pot (4) présent dans ledit groupe thermique (7) est un pot neuf ou un pot partiellement utilisé, sur la base de ladite mesure effectuée par ladite cellule de charge par rapport à la valeur prédéfinie relative au poids dudit pot neuf (4);
- définir la température de stockage dudit pot (4) selon que ledit pot (4) a été évalué comme neuf ou a été évalué comme déjà partiellement utilisé.
